# EUROPEAN PATENT SPECIFICATION

(11) **EP 1 204 508 B1**
(45) Date of publication and mention of the grant of the patent: **19.10.2005**
(21) Application number: 99937732.8
(22) Date of filing: 02.08.1999
(51) Int. Cl.: B23K 20/06

(54) **MOLECULAR BONDING OF VEHICLE FRAME COMPONENTS USING MAGNETIC IMPULSE WELDING TECHNIQUES**
MOLEKULARE VERBINDUNG VON FAHRZEUGRAHMENBAUTEILEN MITTELS MAGNETPULSSCHWEISSEN
LIAISON MOLECULAIRE DE COMPOSANTS DE CHASSIS AUTOMOBILE UTILISANT DES TECHNIQUES DE SOUDAGE PAR IMPULSION MAGNETIQUE

(43) Date of publication of application: 15.05.2002
(73) Proprietor: DANA CORPORATION, Toledo, OH 43615 (US)
(72) Inventor: DURAND, Robert, D., Wyomissing, PA 19610 (US)
(74) Representative: Cheyne, John Robert Alexander M.
(86) International application number: PCT/US1999/017457
(87) International publication number: WO 2001/008843

(56) References cited:
- WO-A-97/00151

## Description

### BACKGROUND OF THE INVENTION

This invention relates in general to the manufacture and assembly of vehicle frame components and in particular to a method for permanently joining two or more metallic vehicle frame components using magnetic impulse welding techniques, as known from, for example, WO 97/00151.

Virtually all land vehicles in common use, such as automobiles and trucks, include a frame which serves as a platform upon which the remainder of the vehicle is built. Many vehicle frame structures are known in the art. Most of these known vehicle frame structures are formed from a number of individual metallic components which are permanently joined together. For example, a typical vehicle frame is composed of a pair of longitudinally extending side rails which are joined together by a plurality of transversely extending cross members. In shorter length vehicles, the side rails can be formed from a single piece of metal. In longer vehicles, however, each of the side rails is usually formed from two or more side rail sections which are permanently joined together. In either event, the side rails and cross members, once joined together, form a frame for supporting the remaining portions of the vehicle thereon. To facilitate the attachment of the other portions of the vehicle to the vehicle frame, a variety of brackets, hangers, cradles, and the like are often joined to the side rails and cross members at desired locations. It is common practice to also form these supporting hardware components from metallic materials, and further to permanently join them to the side rails and cross members at desired locations.

Conventional welding techniques have been commonly used to permanently join the various components of the vehicle frame together. As is well known, conventional welding techniques involve the application of heat to localized areas of two metallic members, which results in a coalescence of the two metallic members. Such welding may or may not be performed with the application of pressure, and may or may not include the use of a filler metal. Although conventional welding techniques have functioned satisfactorily in the past, there are some drawbacks to the use thereof in joining metallic vehicle frame components together. First, as noted above, conventional welding techniques involve the application of heat to localized areas of the two metallic frame members. This application of heat can cause undesirable distortions and weaknesses to be introduced into the metallic components. Second, while conventional welding techniques are well suited for joining components which are formed from similar metallic materials, it has been found to be somewhat more difficult to adapt them for use in joining components formed from dissimilar metallic materials. Third, conventional welding techniques are not easily adapted for joining components which have different gauge thicknesses. Inasmuch as the production of vehicle frames is usually an high volume, low margin process, it would be desirable to provide an improved method and apparatus for permanently joining two or more metallic vehicle frame components which avoids the drawbacks of conventional welding techniques.

### SUMMARY OF THE INVENTION

According to one aspect of the present invention there is provided a method of permanently joining a first metallic vehicle frame component with a second metallic vehicle frame component to manufacture part of a vehicle frame assembly comprising the steps of:
(a) providing a first metallic vehicle frame structural component;
(b) providing a second metallic vehicle frame structural component having an end portion;
(c) disposing the end portion of the second structural component adjacent to the first structural component;
(d) providing an electromagnetic coil; and
(e) energizing the electromagnetic coil to generate an electromagnetic field that causes the end portion of the second structural component to impact the first structural component at a high velocity so as to permanently join the first and second structural components together;
characterised in that the end portion of the second structural component includes a laterally extending tab formed thereon, the tab is oriented generally parallel to the first structural component when the second structural component is disposed adjacent to the first structural component, and energizing the electromagnetic coil causes the tab to impact the first structural component at a high velocity so as to permanently join the tab and the first structural component together.

Preferred features of the invention are the subject of the dependent claims.

Various objects and advantages of this invention will become apparent to those skilled in the art from the following detailed description of a vehicle frame, a magnetic impulse welding apparatus and the preferred embodiments, when read in light of the accompanying drawings.

### BRIEF DESCRIPTION OF THE DRAWINGS

Fig. 1 is a schematic perspective view of a vehicle frame.
Fig. 2 is a sectional elevational view of one of the joints between two of the side rail sections illustrated in Fig. 1 prior to being joined together.
Fig. 3 is a sectional elevational view similar to Fig. 2 of the joint between two of the side rail sections illustrated in Fig. 1 after being joined together.
Fig. 4 is a sectional elevational view illustrating a first embodiment of a joint between a side rail and a cross member.
Fig. 5 is a sectional elevational view illustrating a second embodiment of a joint between a side rail and a cross member.
Fig. 6 is a sectional elevational view similar to Fig. 4 illustrating a third embodiment of a joint between a side rail and a cross member.

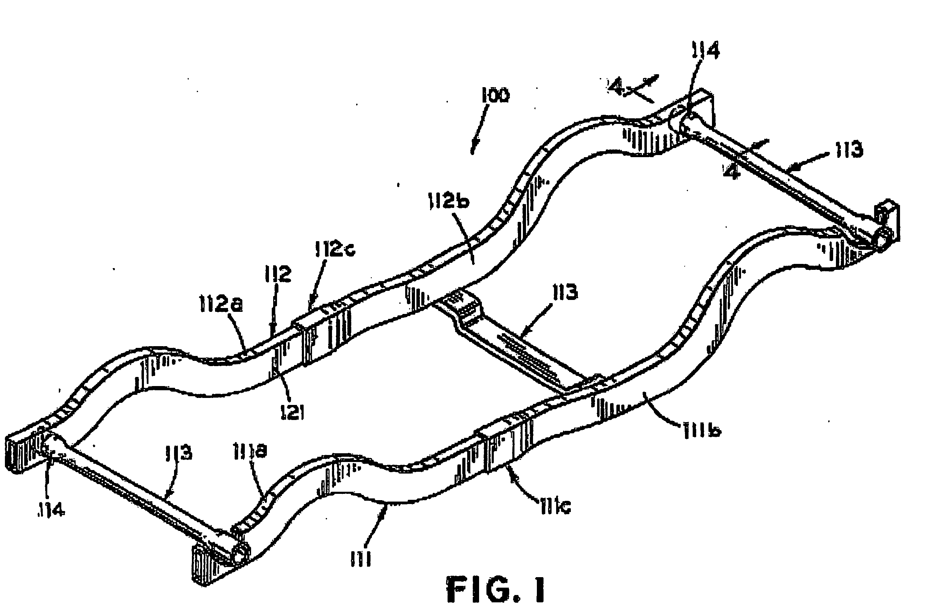

Referring to Fig. 1, there is illustrated a portion of a full perimeter or ladder type vehicle frame assembly, indicated generally at 100. The illustrated vehicle frame assembly 100 includes two longitudinally extending side rails, indicated generally at 111 and 112, respectively. The illustrated side rails 111 and 112 extend throughout most or all of the length of the vehicle. However, it is also known to provide side rails 111 and 112 that extend throughout only a portion of the length of the vehicle. The side rails 111 and 112 are each formed from a pair of relatively short side rail sections 111a, 111b and 112a, 112b, respectively, that are secured together at respective joints, indicated generally at 111c and 112c, in a manner described in detail below.

Typically, the side rails 111 and 112 are formed from the same metallic material, such as steel. However, other materials, such as aluminum, magnesium, and the like, as well as combinations thereof, may be used if desired. It is contemplated that all of the various components of the vehicle frame 10 need not be formed from the same metallic material. Rather, some of such components may be formed from a first metallic material, while others may be formed from a second metallic material.

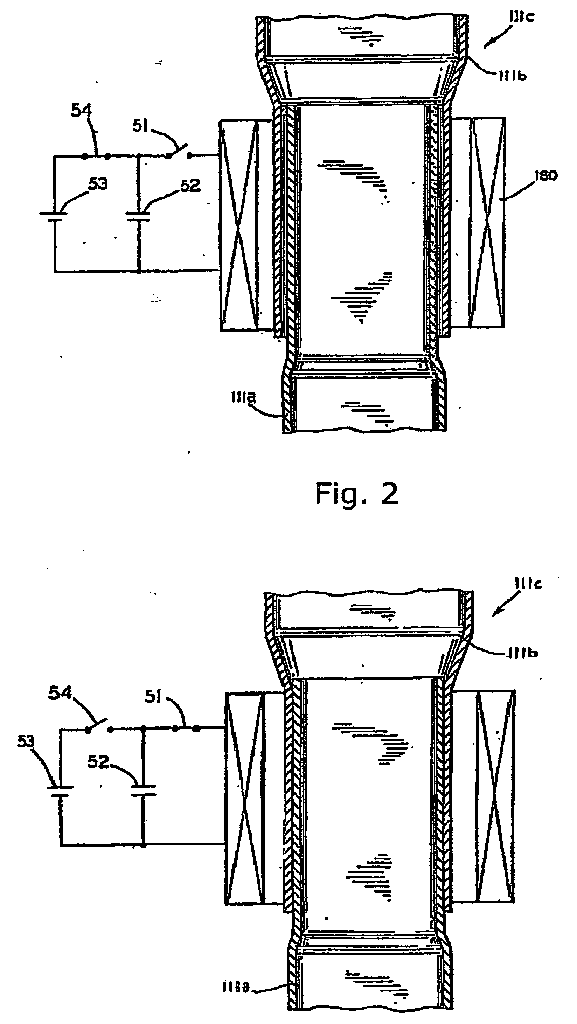

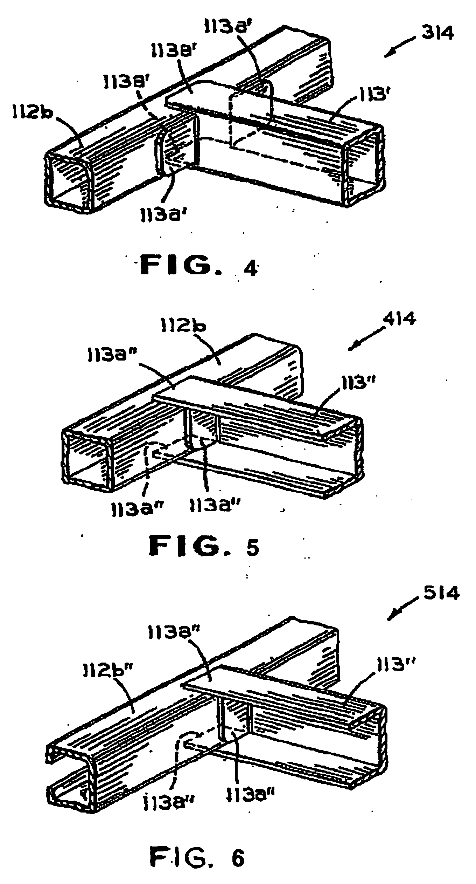

Referring now to Figs. 2 and 3, the formation of the joint 111c between the side rail sections 111a and 111b is illustrated. The end portion of the side rail section 111b is initially formed slightly larger in size than the end portion of the side rail section 111a prior to being joined together. Thus, the end portion 63c of the side rail section 111a may initially be disposed telescopically within the end portion of the side rail section 111b, as shown in Fig. 2. When so disposed, the outer surface of the end portion of the side rail section 111a is disposed in a spaced apart relationship with the inner surface of the end portion of the side rail section 111b. Although the clearance between these surfaces may be adjusted as desired, it has been found acceptable to provide a clearance in the range of from 1.27 mm to 2.54 mm (0.050 inch to 0.100 inch).

An electromagnetic coil 180 is provided for generating a magnetic field which, as will be explained further below, causes the end portion of the side rail section 111a and the end portion of the side rail section 111b to move toward one another. The electromagnetic coil 180 is disposed about the telescoping end portions of the side rail sections 111a and 111b.

The electromagnetic coil 180 is embodied as a plurality of windings of an electrical conductor. A first end of the electrical conductor is connected through a first switch 51 to a first side of a capacitor 52, while a second end of the electrical conductor is connected directly to a second side of the capacitor 52. The capacitor 52 is representative of a number of high voltage capacitors which are connected together in parallel. A source of electrical energy 53 is provided for selectively charging the capacitor 52 to store a quantity of electrical energy therein. A first side of the source of electrical energy 53 is connected through a second switch 54 to the first side of the capacitor 52, while a second side of the source of electrical energy 53 is connected directly to the second side of the capacitor 52.

In operation, the first switch 51 is initially opened and the second switch 54 is initially closed, as shown in Fig. 2. In this condition, electrical energy is transferred from the source of electrical energy 53 into the capacitor 52. When a sufficient amount of electrical energy has been stored in the capacitor 52, the second switch 54 is opened and the first switch 51 is closed, as shown in Fig. 3. By closing the first switch 51, energy in the form of electrical current is discharged from the capacitor 52 through the electromagnetic coil 180. As a result, an intense electromagnetic field is generated about the first and second side rail sections. The presence of this electromagnetic field induces electrical currents in the first and second side rails sections 111a and 111b. These electrical currents, in turn, create opposing magnetic fields which draw the first and second side rail sections 111a and 111b into contact with one another. When this occurs, a large pressure exerted on the first and second side rail sections 111a and 111b moves them toward one another at a high velocity.

The high velocity impact of the first and second side rail sections 111a and 111b, as well as the large pressures exerted thereon, cause the two components to weld or molecularly bond. The sizes and shapes of the side rail sections 111a and 111b, the size and shape of the electromagnetic coil 180, and the strength of the electromagnetic field are all factors which will determine where the deformation of the first and second side rail sections 111a and 111b will occur, as well as which portions thereof will be joined together.

Figs. 4 through 6 illustrate a number of alternative embodiments of a joint between a side rail and a cross member in accordance with the invention.

In a first embodiment of the joint 314 illustrated in Fig. 4, a modified cross member 113' includes a generally rectangular end portion having a plurality of outwardly extending tabs 113a' formed thereon. The tabs 113s' are initially oriented in a generally parallel and spaced apart relationship relative to the adjacent portions of the side rail section 112b. Then, using the coil 180 described above, each of the tabs 113a' can be deformed into engagement with the adjacent portions of the side rail section 112b so as to become welded or molecularly bonded thereto as described above, although four of such tabs 113a' are illustrated, it will be appreciated that a lesser number of such tabs 113a' may be provided and secured to the side rail section 112b.

In a second embodiment of the joint 414 illustrated in Fig. 5, a further modified cross member 113" is formed having a generally C-shaped or U-shaped cross section. The cross member 113" includes a generally rectangular end portion having a plurality of outwardly extending tabs 113a" formed thereon. The tabs 113a" are initially oriented in a generally parallel and spaced apart relationship relative to the adjacent portions of the side rail section 112b. Then, using the coil 180 described above, each of the tabs 113a" can be deformed into engagement with the adjacent portions of the side rail section 112b so as to become welded or molecularly bonded thereto as described above. Although three of such tabs 113a" are illustrated, it will be appreciated that a lesser number of such tabs 113a" may be provided and secured to the side rail section 112b.

In a third embodiment of the joint 514 illustrated in Fig. 6, a modified side rail section 112b" is formed having a generally C-shaped or U-shaped cross section. The modified cross member 113" is formed having a generally C-shaped or U-shaped cross section. The cross member 113" includes a generally rectangular end portion having a plurality of outwardly extending tabs 113a" formed thereon. The tabs 113a" are initially oriented in a generally parallel and spaced apart relationship relative to the adjacent portions of the side rail section 112b". Then, using the coil 180 described above, each of the tabs 113a" can be deformed into engagement with the adjacent portions of the side rail section 112b" so as to become welded or molecularly bonded thereto as described above. Although three of such tabs 113a" are illustrated, it will be appreciated that a lesser number of such tabs 113a" may be provided and secured to the side rail section 112b".

In accordance with the provisions of the patent statutes, the principle and mode of operation of this invention have been explained and illustrated in its preferred embodiments. However, it must be understood that this invention may be practiced otherwise than as specifically explained and illustrated without departing from the scope of the claims.

## Claims

1. A method of permanently joining a first metallic vehicle frame component (112b) with a second metallic vehicle frame component (113') to manufacture part of a vehicle frame assembly (100) comprising the steps of:
(a) providing a first metallic vehicle frame structural component (112b);
(b) providing a second metallic vehicle frame structural component (113') having an end portion;
(c) disposing the end portion of the second structural component (113') adjacent to the first structural component (112b);
(d) providing an electromagnetic coil (180); and
(e) energizing the electromagnetic coil (180) to generate an electromagnetic field that causes the end portion of the second structural component (113') to impact the first structural component (112b) at a high velocity so as to permanently join the first and second structural components together;
**characterised in that** the end portion of the second structural component (113') includes a laterally extending tab (113a') formed thereon, the tab (113a') is oriented generally parallel to the first structural component (112b) when the second structural component (113') is disposed adjacent to the first structural component (112b), and energizing the electromagnetic coil (180) causes the tab (113a') to impact the first structural component (112b) at a high velocity so as to permanently join the tab and the first structural component together.

2. The method defined in Claim 1 wherein the end portion of the second structural component (113') includes a plurality of laterally extending tabs (113a', 113a') formed thereon, and energizing the electromagnetic coil (180) causes the tabs (113a', 113a') to impact the first structural component (112b) at a high velocity so as to be permanently join the tabs and the first structural component together.

3. The method defined in Claim 2 wherein the laterally extending tabs (113a', 113a') extend outwardly from the end portion of the second structural component (113').

4. The method defined in Claim 1 wherein the end portion of the second structural component (113') further includes a longitudinally extending tab (113a') formed thereon, the longitudinally extending tab (113a') is disposed in overlapping relationship with the first structural component (112b) when the end portion of the second structural component (113') is disposed adjacent to the first structural component (112b), and energizing the electromagnetic coil (180) causes the longitudinally extending tab (113a') to impact the first structural component (112b) at a high velocity so as to permanently join the longitudinally extending tab and the first structural component together.

5. The method defined in Claim 4 wherein the end portion of the second structural component (113') includes a plurality of longitudinally extending tabs (113a', 113a') formed thereon, the longitudinally extending tabs (113a', 113a') are disposed in overlapping relationship with the first structural component (112b) when the end portion of the second structural component (113') is disposed adjacent to the first structural component (112b), and energizing the electromagnetic coil (180) causes the longitudinally extending tabs (113a', 113a') to impact the first structural component (112b) at a high velocity so as to permanently join the longitudinally extending tabs and the first structural component together.

6. The method defined in Claim 1 wherein the first structural component (112b) comprises a vehicle frame side rail (112b) and the second structural component (113') comprises a vehicle frame cross member (113').

## Patentansprüche

1. Verfahren zum ständigen Verbinden einer ersten, metallischen Fahrzeugrahmenkomponente (112b) mit einer zweiten metattischen Fahrzeugrahmenkomponente (113') zur Herstellung eines Teils einer Fahrzeugrahmenanordnung (100), welches die folgenden Schritte aufweist:
(a) Vorsehen einer ersten metallischen Fahrzeugrahmenbaukomponente (112b);
(b) Vorsehen einer zweiten metallischen Fahrzeugrahmenbaukomponente (113'), welche einen Endabschnitt besitzt;
(c) Anordnung des Endabschnitts der zweiten Baukomponente (113') in der Nähe der ersten Baukomponente, (112b);
(d) Vorsehen einer elektromagnetischen Spule (180); und
(e) Erregen der elektromagnetischen Spule (180) zum Erzeugen eines elektromagnetischen Feldes, welches bewirkt, daß der Endabschnitt der zweiten Baukomponente (113') gegen die erste Baukomponente (112b) mit einer hohen Geschwindigkeit derart stößt, daß die ersten und die zweiten Baukomponenten ständig miteinander verbunden werden;
**dadurch gekennzeichnet, daß** der Endabschnitt der zweiten Baukomponente (113') einen seitlich verlaufenden laschenförmigen Fortsatz (113a') umfaßt, welcher an dieser ausgebildet ist, der laschenförmige Fortsatz (113a') im allgemeinen parallel zu der ersten Baukomponente (112b) ausgerichtet ist, wenn die zweite Baukomponente (113') in der Nähe der ersten Baukomponente (112b) angeordnet ist, und daß die Erregung der elektromagnetischen Spule (180) bewirkt, daß der laschenförmige Fortsatz (113a') gegen die erste Baukomponente (112b) mit einer hohen Geschwindigkeit derart stößt, daß der laschenförmige Fortsatz und die erste Baukomponente ständig miteinander verbunden werden.

2. Verfahren nach Anspruch 1, bei dem der Endabschnitt der zweiten Baukomponente (113') eine Mehrzahl von seitlich verlaufenden laschenförmigen Fortsätzen (113a', 113a') aufweist, welche an dieser ausgebildet sind und daß die Erregung der elektromagnetischen Spule (180) bewirkt, daß die laschenförmigen Fortsätze (113a', 113a') gegen die erste Baukomponente (100b) mit einer hohen Geschwindigkeit derart stoßen, daß die laschenförmigen Fortsätze und die erste Baukomponente ständig miteinander verbunden werden.

3. Verfahren nach Anspruch 2, bei dem die seitlich verlaufenden, laschenförmigen Fortsätze (113a', 113a') von dem Endabschnitt der zweiten Baukomponente (113') nach außen verlaufen.

4. Verfahren nach Anspruch 1, bei dem der Endabschnitt der zweiten Baukomponente (113') ferner einen in Längsrichtung verlaufenden, laschenförmigen Fortsatz (113a') umfaßt, welcher an dieser ausgebildet ist, der in Längsrichtung verlaufende laschenförmige Ansatz (113a') in überlappender Anordnung mit der ersten Baukomponente (112b) angeordnet ist, wenn der Endabschnitt der zweiten Baukomponente (113') in der Nähe der ersten Baukomponente (112b) angeordnet ist, und daß die Erregung der magnetischen Spule (180) bewirkt, daß der in Längsrichtung verlaufende, laschenförmige Fortsatz (113a') gegen die erste Baukomponente (112b) mit einer hohen Geschwindigkeit derart stößt, daß der in Längsrichtung verlaufende, laschenförmige Fortsatz und die erste Baukomponente ständig miteinander verbunden werden.

5. Verfahren nach Anspruch 4, bei dem der Endabschnitt der zweiten Baukomponente (113') eine Mehrzahl von in Längsrichtung verlaufenden laschenförmigen Fortsätzen (113a', 113a') umfaßt, die an dieser ausgebildet sind, daß die in Längsrichtung verlaufenden, laschenförmigen Fortsätze (113a', 113a') in überlappender Anordnung mit der ersten Baukomponente (112b) angeordnet sind, wenn der Endabschnitt der zweiten Baukomponente (113') in der Nähe der ersten Baukomponente (112b) angeordnet ist, und daß die Erregung der elektromagnetischen Spule (180) bewirkt, daß die in Längsrichtung Verlaufenden laschenförmigen Fortsätze (113a', 113a') gegen die erste Baukomponente (112b) mit einer hohen Geschwindigkeit derart stoßen, daß die in Längsrichtung verlaufenden, laschenförmigen Fortsätze und die erste Baukomponente ständig miteinander verbunden werden.

6. Verfahren nach Anspruch, 1, bei dem die erste Baukomponente (112b) einen Fahrzeugrahmenlängsträger (112b) und die zweite Baukomponente (113') ein Fahrzeugrahmenquerelement (113') aufweist.

## Revendications

1. Procédé pour relier d'une manière permanente un premier composant de châssis de véhicule métallique (112b) à un deuxième composant de châssis de véhicule métallique (113') pour fabriquer une partie d'un ensemble de châssis de véhicule (100) comprenant les étapes consistant à:
(a) réaliser un premier composant structurel de châssis de véhicule métallique (112b);
(b) réaliser un deuxième composant structurel de châssis de véhicule métallique (113') possédant une portion d'extrémité;
(c) disposer la portion d'extrémité du deuxième composant structurel (113') d'une manière adjacente au premier composant structurel (112b);
(d) réaliser une bobine électromagnétique (180); et
(e) exciter la bobine électromagnétique (180) pour produire un champ électromagnétique qui amène la portion d'extrémité du deuxième composant structurel (113') à heurter le premier composant structurel (112b) à une vitesse élevée de façon à relier d'une manière permanente les premier et deuxième composants structurels;
**caractérisé en ce que** la portion d'extrémité du deuxième composant structurel (113') comprend une patte s'étendant latéralement (113a') formée sur celui-ci, la patte (113a') est orientée généralement parallèlement au premier composant structurel (112b) lorsque le deuxième composant structurel (113') est disposé d'une manière adjacente au premier composant structurel (112b), et l'excitation de la bobine électromagnétique (180) amène la patte (113a') à heurter le premier composant structurel (112b) à une vitesse élevée de façon à relier d'une manière permanente la patte et le premier composant structurel ensemble.

2. Procédé selon la revendication 1, où la portion d'extrémité du deuxième composant structurel (113') comprend plusieurs pattes s'étendant latéralement (113a', 113a') formées sur celui-ci, et l'excitation de la bobine électromagnétique (180) amène les pattes (113a', 113a') à heurter le premier composant structurel (112b) à vitesse élevée de façon à relier d'une manière permanente les pattes et le premier composant structurel ensemble.

3. Procédé selon la revendication 2, où les pattes s'étendant latéralement (113a', 113a') s'étendent vers l'extérieur depuis la portion d'extrémité du deuxième composant structurel (113').

4. Procédé selon la revendication 1, où la portion d'extrémité du deuxième composant structurel (113') comprend en outre une patte s'étendant longitudinalement (113a') formée sur celui-ci, la patte s'étendant longitudinalement (113a') est disposée selon une relation de recouvrement avec le premier composant structurel (112b) lorsque la portion d'extrémité du deuxième composant structurel (113') est disposée d'une manière adjacente au premier composant structurel (112b), et l'excitation de la bobine électromagnétique (180) amène la patte s'étendant longitudinalement (113a') à heurter le premier composant structurel (112b) à vitesse élevée de façon à relier d'une manière permanente la patte s'étendant longitudinalement et le premier composant structurel ensemble.

5. Procédé selon la revendication 4, où la portion d'extrémité du deuxième composant structurel (113') comprend plusieurs pattes s'étendant longitudinalement (113a', 113a') formées sur celui-ci, les pattes s'étendant longitudinalement (113a', 113a') sont disposées selon une relation de recouvrement avec le premier composant structurel (112b) lorsque la portion d'extrémité du deuxième composant structurel (113') est disposée d'une manière adjacente au premier composant structurel (112b), et l'excitation de la bobine électromagnétique (180) amène les pattes s'étendant longitudinalement (113a', 113a') à heurter le premier composant structurel (112b) à vitesse élevée de façon à relier d'une manière permanente les pattes s'étendant longitudinalement et le premier composant structurel ensemble.

6. Procédé selon la revendication 1, où le premier composant structurel (112b) comprend un rail latéral de châssis de véhicule (112b), et le deuxième composant structurel (113') comprend une traverse de châssis de véhicule (113').
